# EUROPÄISCHE PATENTANMELDUNG

(11) **EP 4 254 745 A1**
(43) Veröffentlichungstag der Anmeldung: **04.10.2023**
(21) Anmeldenummer: 22165817.2
(22) Anmeldetag: 31.03.2022
(51) Int. Cl.: H02K 11/25, H02K 3/50

(54) **STATORVORRICHTUNG FÜR EINE ELEKTRISCHE MASCHINE**

(71) Anmelder: Valeo eAutomotive Germany GmbH, 91056 Erlangen (DE)
(72) Erfinder: Noe, Benedikt, 97616 Bad Neustadt a. d. Saale (DE)
(74) Vertreter: Valeo Powertrain Systems

(57) **Zusammenfassung**

Statorvorrichtung (1) für eine elektrische Maschine (100), aufweisend:
- einen Statorkern (2), der eine Längsachse (3) und eine axiale Stirnseite (4) aufweist;
- eine Statorwicklung (6), die an der Stirnseite (4) einen sich bis zu einer ersten Axialposition (25) aus dem Statorkern (2) heraus erstreckenden Wicklungskopf (7) ausbildet;
- mehrere Anschlussabschnitte (8), die elektrisch leitend mit der Statorwicklung (6) verbunden sind und an der Stirnseite (4) bis zu einer zweiten Axialposition (26), die axial weiter vom Statorkern (2) entfernt ist als die erste Axialposition (25), aus dem Statorkern (2) herausragen;
- eine Stromschiene (10), welche die Anschlussabschnitte (8) elektrisch leitfähig miteinander verbindet;
- einen Temperatursensor (14), der dazu eingerichtet ist, eine Temperatur an einer vorgegebenen Erfassungsposition (27) eines aus dem Wicklungskopf (7) und den Anschlussabschnitten (8) bestehenden Außenteils (9) der Statorvorrichtung (1) zu erfassen; und
- eine Befestigungsvorrichtung (12), die einen an der Stromschiene (10) befestigten Befestigungsabschnitt (13) und einen den Temperatursensor (14) an der Erfassungsposition (27) halternden Halterabschnitt (15) aufweist.

## Beschreibung

Die vorliegende Erfindung betrifft eine Statorvorrichtung für eine elektrische Maschine.

Bei elektrischen Maschinen besteht der Bedarf, die Temperatur des Stators zu überwachen. Dabei wird eine Temperatur im Bereich eines aus einem Statorkern herausragenden Wicklungskopfs erfasst. Die so erfasste Temperatur kann beispielsweise der Einleitung von Schutzmaßnahmen beim Betrieb der elektrischen Maschine dienen, um beispielsweise eine Überhitzung zu vermeiden.

Es wurde bereits vorgeschlagen, einen Temperatursensor mittels einer Federklemme an einem Neutralleiter des Stators zu befestigen und die Temperatur des Neutralleiters zu messen. So offenbart die DE 10 2017 222 543 A1 eine elektrische Maschine mit einem Stator. Auf einem Leiterende eines Neutralleiters des Stators ist eine Federklemme aufgesteckt und mit dem Leiterende verklemmt. Ein Temperatursensor ist in einer Sensorhalterung der Federklemme angeordnet. Die Sensorhalterung ist an den Neutralleiter angepresst.

Eine Befestigung des Temperatursensors an einem Neutralleiter ist zwar einfach durchzuführen. Allerdings ist dieser oft weit vom Wicklungskopf entfernt, sodass die gemessene Temperatur nicht immer der tatsächlichen Temperatur des Wicklungskopfs entspricht.

Der Erfindung liegt mithin die Aufgabe zugrunde, eine verbesserte Möglichkeit zur Temperaturmessung im Bereich eines Wicklungskopfs einer Statorvorrichtung für eine elektrische Maschine anzugeben.

Diese Aufgabe wird erfindungsgemäß gelöst durch eine Statorvorrichtung für eine elektrische Maschine, aufweisend: einen Statorkern, der eine Längsachse und eine axiale Stirnseite aufweist; eine Statorwicklung, die an der Stirnseite einen sich bis zu einer ersten Axialposition aus dem Statorkern heraus erstreckenden Wicklungskopf ausbildet; mehrere Anschlussabschnitte, die elektrisch leitend mit der Statorwicklung verbunden sind und an der Stirnseite bis zu einer zweiten Axialposition, die axial weiter vom Statorkern entfernt ist als die erste Axialposition, aus dem Statorkern herausragen; eine Stromschiene, welche die Anschlussabschnitte elektrisch leitfähig miteinander verbindet; einen Temperatursensor, der dazu eingerichtet ist, eine Temperatur an einer vorgegebenen Erfassungsposition eines aus dem Wicklungskopf und den Anschlussabschnitten bestehenden Außenteils der Statorvorrichtung zu erfassen; und eine Befestigungsvorrichtung, die einen an der Stromschiene befestigten Befestigungsabschnitt und einen den Temperatursensor an der Erfassungsposition halternden Halterabschnitt aufweist.

Die erfindungsgemäße Statorvorrichtung für eine elektrische Maschine weist einen Statorkern auf. Der Statorkern weist eine Längsachse auf. Der Statorkern weist ferner eine axiale Stirnseite auf. Die Statorvorrichtung weist ferner eine Statorwicklung auf. Die Statorwicklung bildet an der Stirnseite einen Wicklungskopf aus. Der Wicklungskopf erstreckt sich bis zu einer ersten Axialposition aus dem Statorkern heraus. Die Statorvorrichtung weist ferner mehrere Anschlussabschnitte auf. Die Anschlussabschnitte sind elektrisch leitend mit der Statorwicklung verbunden. Die Anschlussabschnitte ragen an der Stirnseite bis zu einer zweiten Axialposition aus dem Statorkern heraus. Die zweite Axialposition ist axial weiter vom Statorkern entfernt als die erste Axialposition. Die Statorvorrichtung weist ferner eine Stromschiene auf. Die Stromschiene verbindet die Anschlussabschnitte elektrisch leitfähig miteinander. Die Statorvorrichtung weist ferner einen Temperatursensor auf. Der Temperatursensor ist dazu eingerichtet, eine Temperatur an einer vorgegebenen Erfassungsposition eines Außenteils der Statorvorrichtung zu erfassen. Der Außenteil besteht aus dem Wicklungskopf und den Anschlussabschnitten. Die Statorvorrichtung weist ferner eine Befestigungsvorrichtung auf. Die Befestigungsvorrichtung weist einen Befestigungsabschnitt auf. Der Befestigungsabschnitt ist an der Stromschiene befestigt. Die Befestigungsvorrichtung weist ferner einen Halterabschnitt auf. Der Halterabschnitt haltert hat den Temperatursensor an der Erfassungsposition.

Die Erfindung beruht auf der Überlegung, den Befestigungsabschnitt an der Stromschiene zu befestigen, welche die weiter als der Wicklungskopf aus dem Statorkern herausragenden Anschlussabschnitte miteinander verbindet. Der Halterabschnitt der Befestigungsvorrichtung haltert den Temperatursensor jedoch nicht an der Stromschiene, sondern an der Erfassungsposition des Außenteils, also des Wicklungskopfs und/oder der Anschlussabschnitte. Dies verbindet die aufwandsarme Anordnung der Befestigungsvorrichtung mittels des Befestigungsabschnitts an der Stromschiene mit in vorteilhafter Weise mit der Anordnung des Temperatursensors am Außenteil. Dies ermöglicht eine genauere Temperaturerfassung im Bereich des Wicklungskopfs.

Die Befestigung des Befestigungsabschnitts an der Stromschiene ist ferner unter dem Gesichtspunkt vorteilhaft, dass eine Befestigung an einem Statorgehäuse oder an einem Lagerschild, wie es herkömmlicherweise auch bekannt ist, vermieden werden kann. Dies erleichtert die Gewährleistung von ausreichenden Luft- und Kriechstrecken zwischen der Stromschiene und dem Statorgehäuse bzw. Lagerschild. Ebenso kann die Befestigung des Befestigungsabschnitts an der Stromschiene zeitlich unabhängig von der Anordnung des Lagerschildes an einem Statorgehäuse während der Montage der elektrischen Maschine erfolgen, was die Fertigung erleichtert.

Die Begriffe "axial", "Axialposition", "Axialrichtung", "Axialbewegung", "radial" und "Umfangsrichtung" beziehen sich insbesondere auf die Längsachse des Statorkerns. Der Statorkern der erfindungsgemäßen Statorvorrichtung ist typischerweise aus einer Vielzahl von axial geschichtet angeordneten und/oder gegeneinander elektrisch isolierten Einzelblechen ausgebildet. Der Statorkern kann insofern auch als Statorblechpaket aufgefasst werden. Die Stromschiene ist vorzugsweise vom Statorkern ausgesehen jenseits der ersten Axialposition angeordnet. In bevorzugter Ausgestaltung ist die Stromschiene stoffschlüssig, bevorzugt durch Schweißen, mit den Anschlussabschnitten elektrisch leitfähig verbunden.

Der Temperatursensor weist vorzugsweise einen Fühler auf, der an der Erfassungsposition angeordnet ist. Der Fühler ist vorzugsweise ein temperaturabhängiger Widerstand, insbesondere ein NTC-Widerstand. Der Fühler kann auch eine wärmeleitfähige Einfassung, beispielsweise eine Vergussmasse oder einen Strumpfschlauch, aufweisen. In diesem Fall erfolgt die Temperaturerfassung durch die an der Erfassungsposition anliegende Einfassung hindurch. Der Temperatursensor kann ferner mit dem Fühler verbundene Sensorleitungen aufweisen, über die vom Fühler erzeugte Sensorsignale übertragbar sind. Die Befestigungsvorrichtung kann aus einem Metall, vorzugsweise Stahl, oder aus Kunststoff, vorzugsweise einem Thermoplast, gebildet sein.

Bei der erfindungsgemäßen Statorvorrichtung ist bevorzugt vorgesehen, dass die Stromschiene sich in Axialrichtung von einem dem Statorkern abgewandten axialen ersten Stromschienenende zu einem dem Statorkern zugewandten axialen zweiten Stromschienende erstreckt und der Befestigungsabschnitt die Stromschiene am ersten Stromschienenende umgreift. Dies erleichtert die Montage des Befestigungsabschnitts an der Stromschiene, indem der Befestigungsabschnitt zum Statorkern hin auf die Stromschiene aufschiebbar ist. Der Befestigungsabschnitt kann beim Aufschieben am ersten Stromschienenende anschlagen, sodass eine Axialbewegung der Befestigungsvorrichtung zum Statorkern hin durch die Stromschiene gehemmt ist.

Bevorzugt übt die Befestigungsvorrichtung eine zur Erfassungsposition gerichtete Rückstellkraft auf den Temperatursensor aus. Dadurch kann sichergestellt werden, dass der Temperatursensor mechanisch robust an der Erfassungsposition angeordnet ist. Die Befestigungsvorrichtung ist vorzugsweise zur Ausübung der Rückstellkraft zumindest abschnittsweise elastisch verformbar ausgebildet.

Vorzugsweise liegt der Temperatursensor am Außenteil an. Insbesondere liegt der Fühler am Außenteil an. Der Außenteil kann alternativ oder zusätzlich eine radiale, insbesondere radial innere, erste Außenteilseite und eine der ersten Außenteilseite gegenüberliegende radiale zweite Außenteilseite aufweisen. In besonders bevorzugter Ausgestaltung liegt die Erfassungsposition auf der ersten Außenteilseite. Es ist aber dennoch möglich, dass die Erfassungsposition auf der zweiten Außenteilseite liegt.

In bevorzugter Ausgestaltung weist die Stromschiene eine radiale, insbesondere radial äußere, erste Stromschienenseite und eine der ersten Stromschienenseite gegenüberliegende radiale zweite Stromschienenseite auf. Der Befestigungsabschnitte kann einen ersten Schenkel aufweisen, der auf der ersten Stromschienenseite angeordnet ist. Der Befestigungsabschnitt kann ferner einen zweiten Schenkel aufweisen, der auf der zweiten Stromschienenseite angeordnet ist.

In bevorzugter Weiterbildung weist der Befestigungsabschnitte ferner einen Steg auf, der den ersten Schenkel und den zweiten Schenkel entlang des ersten Stromschienenendes verbindet.

Gemäß einer vorteilhaften ersten Ausgestaltungsvariante weist der erste Schenkel ein Rückstellelement auf. Es kann vorgesehen sein, dass der erste Schenkel und/oder das Rückstellelement eine von der ersten Stromschienenseite zur zweiten Stromschienenseite gerichtete Rückstellkraft auf die Stromschiene ausübt oder ausüben.

Vorzugsweise weist der zweite Schenkel einen Vorsprung auf, der in einem Zwischenraum zwischen dem zweiten Stromschienenende und dem Wicklungskopf hineinragt und einer von der zweiten Stromschiene zum ersten Stromschienenende gerichtete Axialbewegung der Befestigungsvorrichtung hemmt. Der Vorsprung kann durch eine Biegung des Schenkels oder durch eine in den Zwischenraum hineinragende Materialverstärkung des Schenkels ausgebildet sein.

Gemäß einer vorteilhaften zweiten Ausgestaltungsvariante weist der erste Schenkel ein Rastelement auf. Das Rastelement kann die Stromschiene am zweiten Stromschienenende hintergreifen und eine vom zweiten Stromschienenende zum ersten Stromschienenende gerichtete Axialbewegung der Befestigungsvorrichtung hemmen. Das Rastelement kann durch eine Rastnase ausgebildet sein.

Bei der erfindungsgemäßen Statorvorrichtung kann ferner vorgesehen sein, dass die Befestigungsvorrichtung einen Versatzabschnitt aufweist, welcher zwischen dem Befestigungsabschnitt und dem Halterabschnitt angeordnet und dazu eingerichtet ist, einen axialen und/oder radialen Versatz zwischen dem Befestigungsabschnitt und dem Halterabschnitt auszubilden, sodass die Erfassungsposition am Wicklungskopf liegt. Durch den Versatzabschnitt wird insbesondere eine von der Stromschiene entfernte Positionierung des Temperatursensors an der Erfassungsposition ermöglicht.

Der Versatzabschnitt schließt sich vorzugsweise an den zweiten Schenkel an. Der Versatzabschnitt kann alternativ oder zusätzlich die zur Erfassungsposition gerichtete Rückstellkraft auf den Temperatursensor ausüben.

Alternativ zum Versatzabschnitt kann bei der erfindungsgemäßen Statorvorrichtung vorgesehen sein, dass die Erfassungsposition auf einem der Anschlussabschnitte liegt. Die Erfassungsposition kann sich dabei zwischen der Stirnseite und der ersten Axialposition oder auf der ersten Axialposition oder zwischen der ersten Axialposition und der zweiten Axialposition befinden.

In bevorzugter Ausgestaltung ist der Temperatursensor zwischen dem einen der Anschlussabschnitte und dem zweiten Schenkel angeordnet. Es kann alternativ oder zusätzlich vorgesehen sein, dass der Halterabschnitt einen konvexen Vorsprung aufweist, welcher die zur Erfassungsposition gerichtete Rückstellkraft auf den Temperatursensor ausübt.

Außerdem kann die Befestigungsvorrichtung ein oder mehrere radialer Führungselemente aufweisen, wobei das oder ein jeweiliges Führungselement eine Bewegung der Befestigungsvorrichtung in Umfangsrichtung hemmt, indem es sich radial entlang des einen Anschlussabschnitts erstreckt. Vorzugsweise hemmen die Halterelemente die Bewegung der Befestigungsvorrichtung entlang beider Umfangsrichtungen.

In besonders bevorzugter Ausgestaltung ist die Statorwicklung als Haarnadelwicklung ausgebildet. Vorzugsweise ist vorgesehen, dass die Statorwicklung und die Anschlussabschnitte durch Formleiter erster und zweiter Art ausgebildet sind, wobei die Formleiter erster Art jeweils zwei Beinabschnitte, die einen sich axial durch den Statorkern erstreckende Innenabschnitte ausbilden, und einen den Wicklungskopf ausbildenden und die Innenabschnitte verbindenden Verbindungsabschnitt aufweisen, wobei die Formleiter zweiter Art jeweils einen den Innenabschnitt ausbildenden Beinabschnitt aufweisen und einen der Anschlussabschnitte ausbilden.

Es ist bei der erfindungsgemäßen Statorvorrichtung außerdem bevorzugt, dass die Stromschiene eine Sternpunktverbindung für die Statorwicklung ausbildet.

Die Statorvorrichtung kann ferner eine Sprühkühlung aufweist, welche dazu eingerichtet ist eine Kühlflüssigkeit, insbesondere ein Kühlöl, auf den Außenteil und/oder die Stromscheine zu sprühen. Die Anordnung des Temperatursensors am Außenteil erweist sich nämlich gerade dann als besonders wirkungsvoll, wenn eine aktive Flüssigkeitskühlung vorgesehen ist, bei die besonderes große Temperaturabweichungen zwischen der Stromschiene und dem Wicklungskopf erzeugt.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine perspektivische Ansicht eines ersten Ausführungsbeispiels der erfindungsgemäßen Statorvorrichtung;
- Fig. 2: eine perspektivische Ansicht der Befestigungsvorrichtung und des Temperatursensors gemäß dem ersten Ausführungsbeispiel;
- Fig. 3: eine geschnittene Detailansicht der Statorvorrichtung gemäß dem ersten Ausführungsbeispiel im Bereich der Befestigungsvorrichtung;
- Fig. 4 u. 5: jeweils eine perspektivische Detailansicht der Statorvorrichtung im Bereich der Befestigungsvorrichtung gemäß dem ersten Ausführungsbeispiel;
- Fig. 6: eine perspektivische Ansicht eines zweiten Ausführungsbeispiels der erfindungsgemäßen Statorvorrichtung;
- Fig. 7: eine perspektivische Ansicht der Befestigungsvorrichtung und des Temperatursensors gemäß dem zweiten Ausführungsbeispiel;
- Fig. 8: eine geschnittene Detailansicht der Statorvorrichtung gemäß dem zweiten Ausführungsbeispiel im Bereich der Befestigungsvorrichtung;
- Fig. 9 u. 10: jeweils eine perspektivische Detailansicht der Statorvorrichtung im Bereich der Befestigungsvorrichtung gemäß dem zweiten Ausführungsbeispiel; und
- Fig. 11: eine Prinzipskizze einer elektrischen Maschine mit einem dritten Ausführungsbeispiel der erfindungsgemäßen Statorvorrichtung.

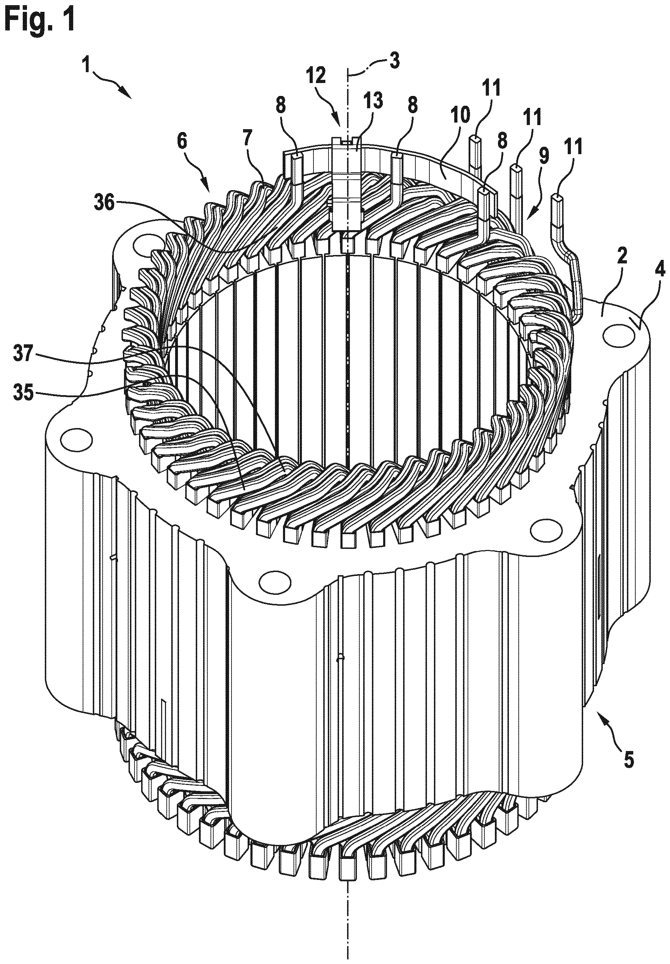

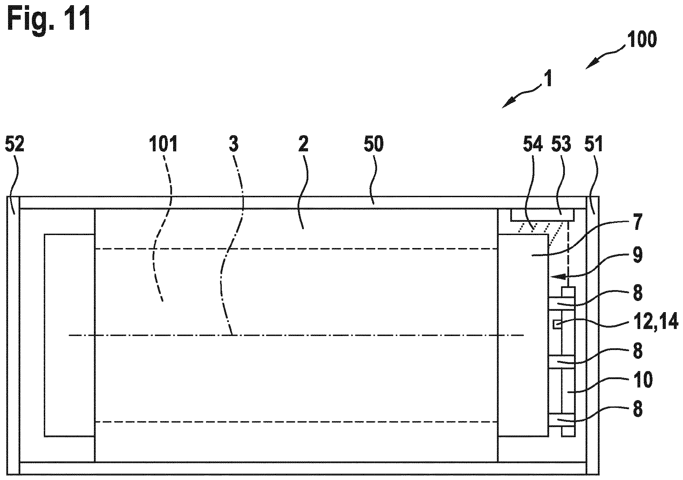

Fig. 1 ist eine perspektivische Ansicht eines ersten Ausführungsbeispiels einer Statorvorrichtung 1 für eine elektrische Maschine 100 (siehe Fig. 11).

Die Statorvorrichtung 1 weist einen Statorkern 2 auf, der eine Längsachse 3 und eine axiale Stirnseite 4 aufweist. Der Stirnseite 4 gegenüberliegend weist der Statorkern 2 eine weitere axiale Stirnseite 5 auf. Der Statorkern 2 ist hier exemplarisch aus einer Vielzahl von axial geschichtet angeordneten und gegeneinander elektrisch isolierten Einzelblechen ausgebildet.

Die Statorvorrichtung 1 weist ferner eine Statorwicklung 6 auf, die an der Stirnseite 4 einen sich aus dem Statorkern 2 heraus erstreckenden Wicklungskopf 7 ausbildet. Daneben sind bei der Statorvorrichtung 1 mehrere Anschlussabschnitte 8 vorgesehen, die elektrisch leitend mit der Statorwicklung 6 verbunden sind und ebenfalls an der Stirnseite 4 aus dem Statorkern 2 herausragen. Der Wicklungskopf 7 und die Anschlussabschnitte 8 bilden einen Außenteil 9 der Statorvorrichtung 1 aus.

Die Anschlussabschnitte 8 sind durch eine Stromschiene 10 der Statorvorrichtung 1 elektrisch leitfähig miteinander verbunden. Exemplarisch sind die Anschlussabschnitte 8 dazu mit der Stromschiene 10 verschweißt. Die Stromschiene 10 bildet beispielsweise eine Sternpunktverbindung für die Statorwicklung 6 aus. In Fig. 1 sind ferner weitere Anschlussabschnitte 11 gezeigt, die jeweils einen Phasenanschluss der Statorwicklung 6 ausbilden.

Außerdem weist die Statorvorrichtung 1 eine Befestigungsvorrichtung 12 auf. Die Befestigungsvorrichtung 12 weist ihrerseits einen Befestigungsabschnitt 13 auf, der an der Stromschiene 10 befestigt ist. Die Befestigungsvorrichtung 12 kann beispielsweise aus Stahl oder aus Kunststoff gebildet sein.

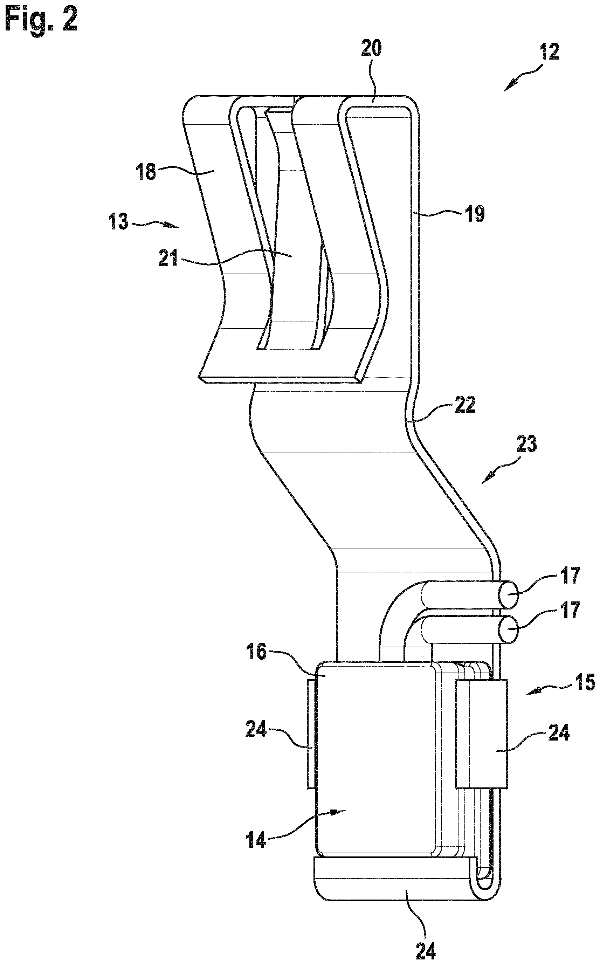

Fig. 2 ist eine perspektivische Ansicht der Befestigungsvorrichtung 12 und eines Temperatursensors 14 gemäß dem ersten Ausführungsbeispiel.

Die Befestigungsvorrichtung 12 weist außerdem einen Halterabschnitt 15 auf, welcher der Temperatursensor 14 der Statorvorrichtung 1 haltert. Der Temperatursensor 14 weist hier exemplarisch einen Fühler 16 mit einer wärmeleitfähigen Einfassung, beispielsweise einer Vergussmasse oder einem Schrumpfschlauch, auf. Der Fühler umfasst beispielsweise ein NTC-Widerstand. Daneben sind in Fig. 2 optionale Sensorleitungen 17 des Temperatursensors 14 dargestellt, über die vom Fühler erzeugte Sensorsignale übertragbar sind.

Im Rahmen dieses Ausführungsbeispiels weist der Befestigungsabschnitt 13 einen ersten Schenkel 18 und einen zweiten Schenkel 19 auf. Die Schenkel 18, 19 sind durch einen Steg 20 miteinander verbunden. Der erste Schenkel 18 weist zudem ein Rückstellelement 21 auf, welches hier als abstehende Zunge ausgebildet ist. Zusätzlich weist der zweite Schenkel 19 einen Vorsprung 22 auf, der durch eine Biegung des zweiten Schenkels ausgebildet ist.

Zwischen dem Befestigungsabschnitt 13 und dem Halterabschnitt 15 weist die Befestigungsvorrichtung 12 in diesem Ausführungsbeispiel außerdem einen Versatzabschnitt 23 auf, der sich an den zweiten Schenkel 19, genauer gesagt an den Vorsprung 22, anschließt. Der Versatzabschnitt 23 bildet einen radialen und axialen Versatz zwischen dem Befestigungsabschnitt 13 und dem Halterabschnitt 15 aus.

Exemplarisch weist der Halterabschnitt 15 in Fig. 2 ferner drei Halterelemente 24 auf, welche den Temperatursensor 14 haltern.

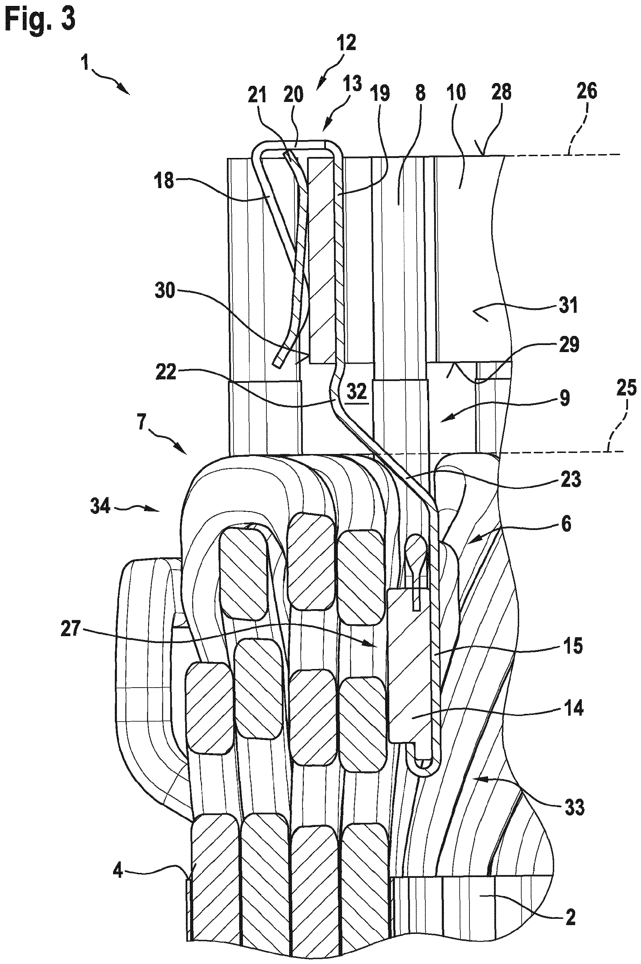

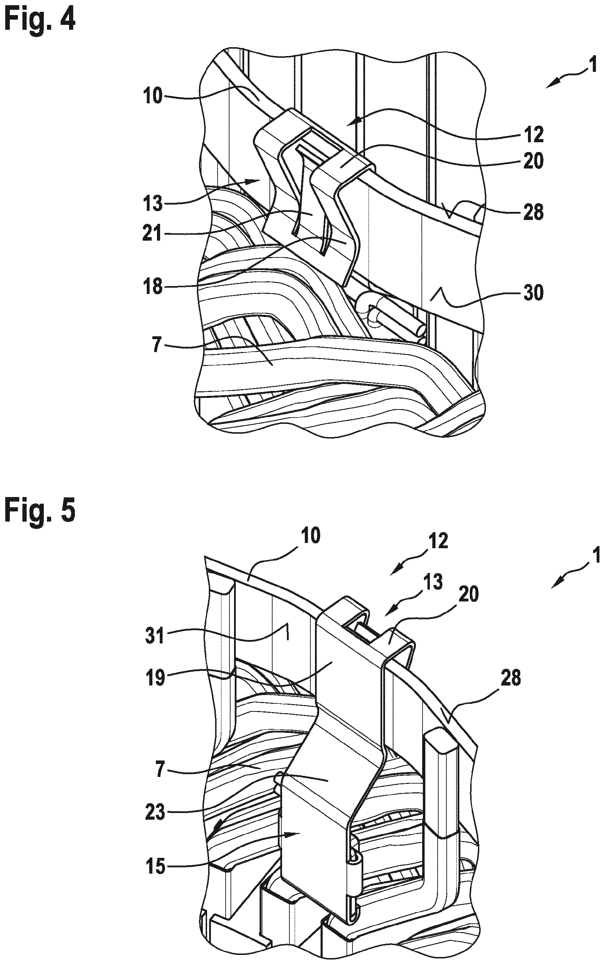

Fig. 3 bis Fig. 5 sind jeweils eine Detailansicht der Statorvorrichtung 1 gemäß dem ersten Ausführungsbeispiel im Bereich der Befestigungsvorrichtung 12, wobei Fig. 3 eine geschnittene Detailansicht ist, Fig. 4 eine perspektivische Detailansicht von außen ist und Fig. 5 eine perspektivische Detailansicht von innen ist.

Wie am besten in Fig. 3 zu erkennen ist, erstreckt sich der Wicklungskopf 7 an der Stirnseite 4 bis zu einer ersten Axialposition 25, wohingegen sich die Anschlussabschnitte 8 bis zu einer zweiten Axialposition 26, die weiter vom Statorkern 2 entfernt ist als die erste Axialposition 25, erstrecken. Der Temperatursensor 14 ist dazu eingerichtet, eine Temperatur an einer Erfassungsposition 27 des Außenteils 9 zu erfassen. Die Erfassungsposition 27 liegt gemäß dem ersten Ausführungsbeispiel am Wicklungskopf 7.

Die Stromschiene 10 erstreckt sich in Axialrichtung von einem dem Statorkern 2 abgewandten axialen ersten Stromschienenende 28 bis zu einem dem Statorkern 2 zugewandten axialen zweiten Stromschienende 29. Daneben weist sie eine radial äußere erste Stromschienenseite 30 und eine radial innere zweite Stromschienenseite 31 auf.

Der Befestigungsabschnitt 13 umgreift die Stromschiene 10 am ersten Stromschienenende 28, wobei der erste Schenkel 18 an der ersten Stromschienenseite 30 ist und der zweite Schenkel 19 an der zweiten Stromschienenseite 31 angeordnet ist. Der Steg 20 erstreckt sich dementsprechend radial entlang des ersten Stromschienenendes 28.

Um den Befestigungsabschnitt 13 an der Stromschiene 10 kraftschlüssig zu befestigen üben der erste Schenkel 18 und das Rückstellelement 21 eine von der ersten Stromschienenseite 30 zur zweiten Stromschienenseite 31 gerichtete Rückstellkraft auf die Stromschiene 10 aus. Zur Hemmung einer vom zweiten Stromschienenende 29 zum ersten Stromschienenende gerichteten, also vom Statorkern 2 wegweisenden, axialen Bewegung der Befestigungsvorrichtung 12 ragt der Vorsprung 22 in einen axialen Zwischenraum 32 zwischen dem zweiten Stromschienenende 29 und dem Wicklungskopf 7 hinein.

Der Versatzabschnitt 23 dient hier erkennbar der vom Befestigungsabschnitt 13 bzw. der Stromschiene 10 in Axial- und Radialrichtung beabstandeten Anordnung des Temperatursensors 14 bzw. des Halterabschnitts 15 an der Erfassungsposition 27. Die Befestigungsvorrichtung 12 ist dabei derart elastisch ausgebildet, dass sie durch den Versatzabschnitt 23 eine zur Erfassungsposition gerichtete Rückstellkraft auf den Temperatursensor 14 ausübt. Dieser kann so stabil am Außenteil 9, hier konkret am Wicklungskopf 7, anliegen. Im vorliegenden Ausführungsbeispiel befindet sich die Erfassungsposition 27 auf einer radial inneren ersten Außenteilseite 33. Es ist aber gemäß alternativen Ausführungsbeispielen aus möglich, dass sich die Erfassungsposition auf einer radial äußeren zweiten Außenteilseite 34 befindet.

Wieder mit Bezug zu Fig. 1 weist die Statorvorrichtung 1 exemplarisch eine Haarnadelwicklung auf. Dazu sind die Anschlussabschnitte 8 und die Statorwicklung 6 durch Formleiter erster Art 35 und Formleiter zweiter Art 36 ausgebildet. Die Formleiter erster Art 25 weisen jeweils zwei Beinabschnitte (in Fig. 1 durch den Statorkern 2 verdeckt) auf, die einen sich axial durch den Statorkern 2 erstreckende Innenabschnitte ausbilden. Ferner weisen die Formleiter erster Art 35 einen den Wicklungskopf 7 ausbildenden und die Innenabschnitte verbindenden Verbindungsabschnitt 37 auf. Die Formleiter zweiter Art 36 weisen jeweils einen den Innenabschnitt ausbildenden Beinabschnitt auf und bilden einen der Anschlussabschnitte 8 aus. An der weiteren Stirnseite 5 sind die Beinabschnitte der Formleiter erster und zweiter Art 35, 36 elektrisch leitfähig, insbesondere durch Schweißen, miteinander verbunden.

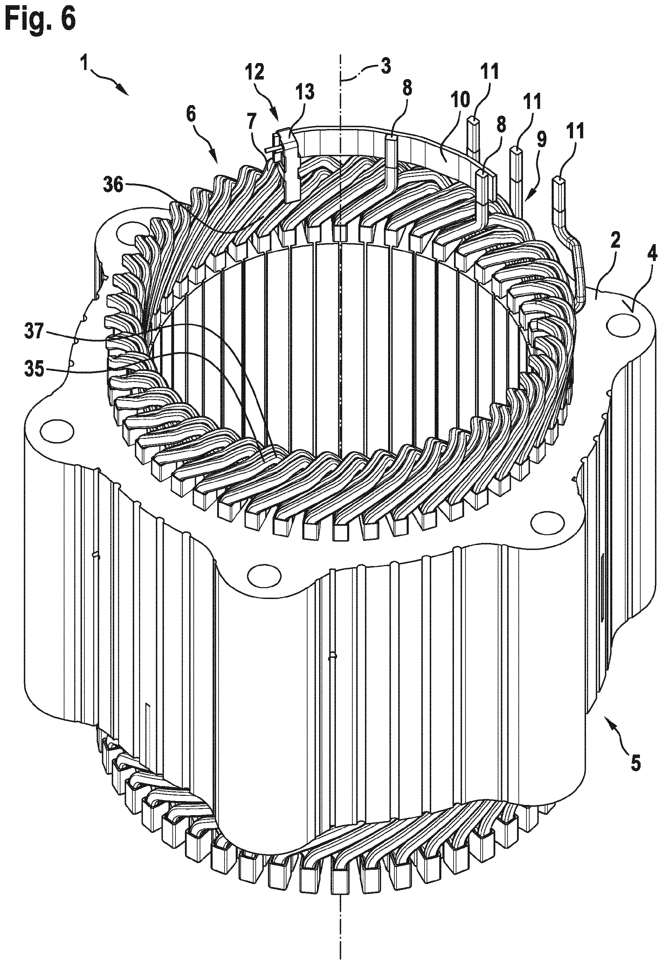

Fig. 6 ist eine perspektivische Ansicht eines zweiten Ausführungsbeispiels einer Statorvorrichtung 1. Sämtliche Ausführungen zum ersten Ausführungsbeispiel lassen sich analog auf das zweite Ausführungsbeispiel übertragen, soweit im Folgenden nichts Abweichendes beschrieben ist. Dabei sind gleiche oder gleichwirkende Komponenten mit identischen Bezugszeichen versehen.

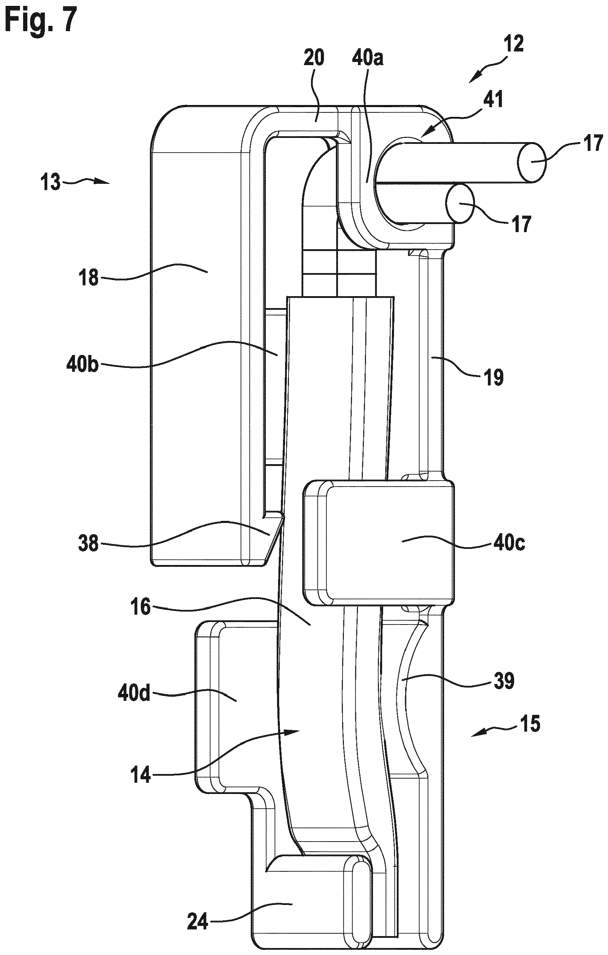

Wie in Fig. 6 im Vergleich zu Fig. 1 zu erkennen ist, unterscheidet sich das zweite Ausführungsbeispiel durch die Ausgestaltung der Befestigungsvorrichtung 12 und die Ausgestaltung und Anordnung des Temperatursensors 14. Die zugehörigen Details werden im Folgenden mit Bezug auf die Fig. 7 bis Fig. 10 beschrieben.

Fig. 7 ist eine perspektivische Ansicht der Befestigungsvorrichtung 12 und des Temperatursensors 14 gemäß dem zweiten Ausführungsbeispiel.

Wie im ersten Ausführungsbeispiel weist die Befestigungsvorrichtung 12 gemäß dem zweiten Ausführungsbeispiel einen Befestigungsabschnitt 13 mit einem ersten Schenkel 18, einem zweiten Schenkel 19 und einem Steg 20 sowie einen Halterabschnitt 15. Der Temperatursensor 14 ist hier lediglich in Bezug auf die konkrete Ausgestaltung der Statorvorrichtung 1 unterschiedlich geformt, aber im Übrigen funktionsgleich mit jenem des ersten Ausführungsbeispiels ausgebildet.

Anstelle des Rückstellelements 21 weist der erste Schenkel 18 ein Rastelement 38 auf, welches als am statorkernseitigen Ende des ersten Schenkels 18 angeordnete Rastnase ausgebildet ist. Beim zweiten Ausführungsbeispiel ist hier kein Versatzabschnitt vorgesehen, sodass sich der zweite Schenkel 19 im Wesentlichen parallel zum ersten Schenkel 18 vom Steg 20 in Richtung des Statorkerns 2 erstreckt. Der zweite Schenkel 19 weist hier einen Vorsprung 39 auf, der durch eine Materialverstärkung ausgebildet ist, und den Temperatursensor 14 bzw. den Fühler 16 geringfügig elastisch verformt.

Daneben ist beim Halterabschnitt 15 gemäß dem zweiten Ausführungsbeispiel lediglich ein Halterelement 24 am statorkernseitigen Ende des Halterabschnitts 15 vorgesehen. Überdies sind bei der Befestigungsvorrichtung 12 gemäß dem zweiten Ausführungsbeispiel vier Führungselemente 40a bis 40d vorgesehen, von denen eines, hier das statorkernfernste Führungselement 40a, eine Durchgangsöffnung 41 zur Durchführung der Sensorleitungen 17 aufweist.

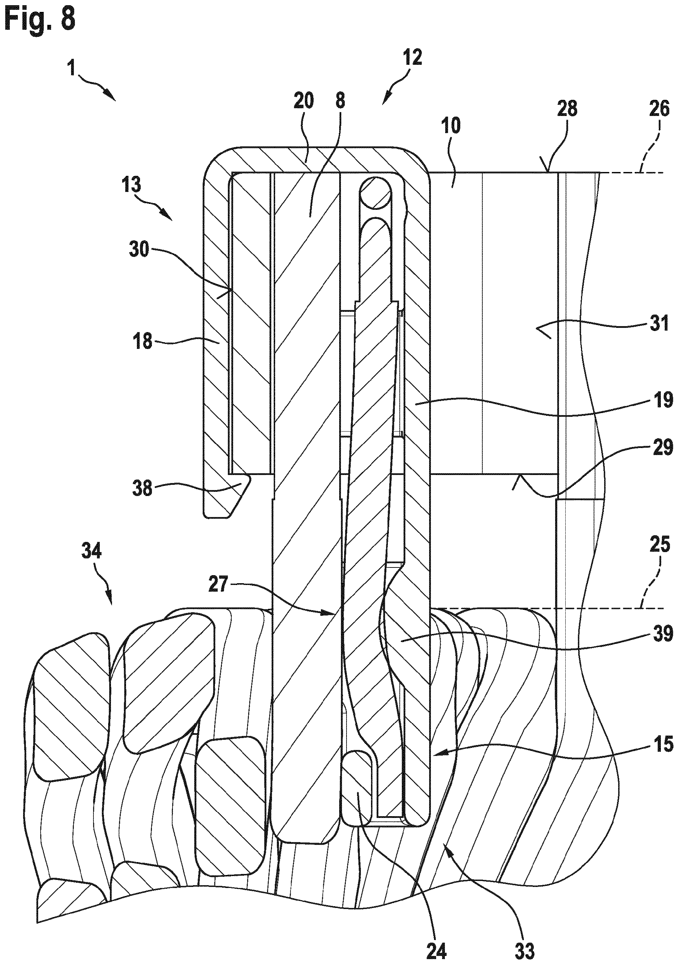

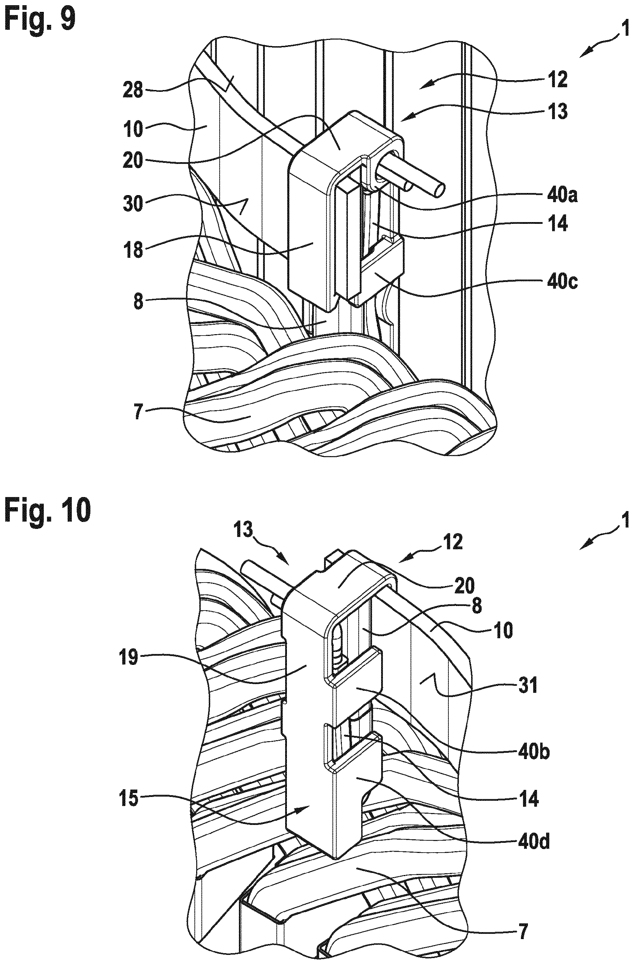

Fig. 8 bis Fig. 10 sind jeweils eine Detailansicht der Statorvorrichtung 1 gemäß dem zweiten Ausführungsbeispiel im Bereich der Befestigungsvorrichtung 12 wobei Fig. 8 eine geschnittene Detailansicht ist, Fig. 9 eine perspektivische Detailansicht von außen ist und Fig. 10 eine perspektivische Detailansicht von innen ist.

Gemäß dem zweiten Ausführungsbeispiel liegt die Erfassungsposition 27 auf einem der Anschlussabschnitte 8, hier exemplarisch in etwa auf Höhe der ersten Axialposition 25. Die Erfassungsposition 27 liegt dabei in einem Bereich des einen Anschlussabschnitts 8, in welchem sich dieser gerade in Axialrichtung erstreckt.

Gemäß dem zweiten Ausführungsbeispiel hintergreift das Rastelement 38 die Stromschiene 10 am zweiten Stromschienenende 29, sodass das Rastelement 38 die vom zweiten Stromschienenende 29 zum ersten Stromschienenende 28 gerichtete Axialbewegung der Befestigungsvorrichtung 12 hemmt. Insoweit ist der Befestigungsabschnitt formschlüssig an der Stromschiene 10 befestigt. Beim zweiten Ausführungsbeispiel übt der Vorsprung 39 die zur Erfassungsposition 27 gerichtete Rückstellkraft auf den Temperatursensor 14 aus.

Wie in Fig. 9 und Fig. 10 am besten zu sehen ist, erstrecken sich die Führungselement 40a bis 40d radial vom zweiten Schenkel zu dem einen Anschlussabschnitt hin und hemmen eine Bewegung der Befestigungsvorrichtung 12 in beide Umfangsrichtungen, indem sie sich radial entlang des einen Anschlussabschnitts 8 erstrecken.

Fig. 11 ist eine Prinzipskizze einer elektrischen Maschine 100 mit einem dritten Ausführungsbeispiel einer Statorvorrichtung 1, welche einem der zuvor beschriebenen Ausführungsbeispiele entspricht.

Die Statorvorrichtung 1 weist hier ferner ein Statorgehäuse 50 sowie zwei das Statorgehäuse 50 axial schließende Lagerschilde 51, 52 auf. Der rein schematisch dargestellt Temperatursensor 14 und die ihn halternde Befestigungsvorrichtung 12 müssen ersichtlich nicht am Lagerschild 51 befestigt werden, sodass ausreichende Luft- und Kriechstrecken gewährleistet sind.

Die Statorvorrichtung 1 weist darüber hinaus auch eine Sprühkühlung 53 auf, welche dazu eingerichtet ist eine Kühlflüssigkeit 54, hier ein Kühlöl, auf den Außenteil 9 und/oder die Stromschiene 10 zu sprühen. Durch die Anordnung des Temperatursensors am bzw. nahe am Wicklungskopf 7 kann hier eine Wicklungskopftemperatur trotz aktiver Flüssigkeitskühlung präzise erfasst werden.

Die elektrische Maschine 100 weist ferner einen rein schematisch dargestellten Rotor 101, der drehbar um die Längsachse 3 innerhalb des Statorkerns 2 gelagert ist. Die elektrische Maschine 100 kann eine Asynchronmaschine oder eine, insbesondere elektrisch oder permanent erregte, Synchronmaschine sein. Vorzugsweise ist die elektrische Maschine 100 dazu eingerichtet ein Fahrzeug, wie ein batterieelektrisches Fahrzeug oder ein Hybridfahrzeug, anzutreiben.

## Patentansprüche

1. Statorvorrichtung (1) für eine elektrische Maschine (100), aufweisend:
- einen Statorkern (2), der eine Längsachse (3) und eine axiale Stirnseite (4) aufweist;
- eine Statorwicklung (6), die an der Stirnseite (4) einen sich bis zu einer ersten Axialposition (25) aus dem Statorkern (2) heraus erstreckenden Wicklungskopf (7) ausbildet;
- mehrere Anschlussabschnitte (8), die elektrisch leitend mit der Statorwicklung (6) verbunden sind und an der Stirnseite (4) bis zu einer zweiten Axialposition (26), die axial weiter vom Statorkern (2) entfernt ist als die erste Axialposition (25), aus dem Statorkern (2) herausragen;
- eine Stromschiene (10), welche die Anschlussabschnitte (8) elektrisch leitfähig miteinander verbindet;
- einen Temperatursensor (14), der dazu eingerichtet ist, eine Temperatur an einer vorgegebenen Erfassungsposition (27) eines aus dem Wicklungskopf (7) und den Anschlussabschnitten (8) bestehenden Außenteils (9) der Statorvorrichtung (1) zu erfassen; und
- eine Befestigungsvorrichtung (12), die einen an der Stromschiene (10) befestigten Befestigungsabschnitt (13) und einen den Temperatursensor (14) an der Erfassungsposition (27) halternden Halterabschnitt (15) aufweist.

2. Statorvorrichtung nach Anspruch 1, wobei
die Stromschiene (10) sich in Axialrichtung von einem dem Statorkern (2) abgewandten axialen ersten Stromschienenende (28) zu einem dem Statorkern (2) zugewandten axialen zweiten Stromschienende (29) erstreckt und der Befestigungsabschnitt (13) die Stromschiene (10) am ersten Stromschienenende (28) umgreift.

3. Statorvorrichtung nach Anspruch 1 oder 2, wobei
die Befestigungsvorrichtung (12) eine zur Erfassungsposition (27) gerichtete Rückstellkraft auf den Temperatursensor (14) ausübt.

4. Statorvorrichtung nach einem der vorhergehenden Ansprüche, wobei
- der Temperatursensor (14) am Außenteil (9) anliegt und/oder
- der Außenteil (9) eine radiale, insbesondere radial innere, erste Außenteilseite (33) und eine der ersten Außenteilseite (33) gegenüberliegende radiale zweite Außenteilseite (34) aufweist und die Erfassungsposition (27) auf der ersten Außenteilseite (33) liegt.

5. Statorvorrichtung nach einem der vorhergehenden Ansprüche, wobei die Stromschiene (10) eine radiale, insbesondere radial äußere, erste Stromschienenseite (30) und eine der ersten Stromschienenseite (30) gegenüberliegende radiale zweite Stromschienenseite (31) aufweist, und der Befestigungsabschnitt (13) einen auf der ersten Stromschienenseite (30) angeordneten ersten Schenkel (18) und einen auf der zweiten Stromschienenseite (31) angeordneten zweiten Schenkel (19) aufweist.

6. Statorvorrichtung nach Anspruch 5, wobei
der erste Schenkel (18) und/oder ein Rückstellelement (21) des ersten Schenkels (18) eine von der ersten Stromschienenseite (30) zur zweiten Stromschienenseite (31) gerichtete Rückstellkraft auf die Stromschiene (10) ausübt oder ausüben.

7. Statorvorrichtung nach Anspruch 5 oder 6, wenn abhängig von Anspruch 2, wobei
der zweite Schenkel (19) einen Vorsprung (22) aufweist, der in einen Zwischenraum (32) zwischen dem zweiten Stromschienenende (29) und dem Wicklungskopf (7) hineinragt und eine vom zweiten Stromschienenende (29) zum ersten Stromschienenende (28) gerichtete Axialbewegung der Befestigungsvorrichtung (12) hemmt.

8. Statorvorrichtung nach Anspruch 5, wenn abhängig von Anspruch 2, wobei der erste Schenkel (18) ein Rastelement (38) aufweist, welches die Stromschiene (10) am zweiten Stromschienenende (29) hintergreift und eine vom zweiten Stromschienenende (29) zum ersten Stromschienenende (28) gerichtete Axialbewegung der Befestigungsvorrichtung (12) hemmt.

9. Statorvorrichtung nach einem der vorhergehenden Ansprüche, wobei die Befestigungsvorrichtung (12) einen Versatzabschnitt (23) aufweist, welcher zwischen dem Befestigungsabschnitt (13) und dem Halterabschnitt (15) angeordnet und dazu eingerichtet ist, einen axialen und/oder radialen Versatz zwischen dem Befestigungsabschnitt (13) und dem Halterabschnitt (15) auszubilden, sodass die Erfassungsposition (27) am Wicklungskopf (7) liegt.

10. Statorvorrichtung nach Anspruch 9, wenn abhängig von Anspruch 5, wobei sich der Versatzabschnitt (23) an den zweiten Schenkel (19) anschließt.

11. Statorvorrichtung nach Anspruch 9 oder 10, wenn abhängig von 3, wobei der Versatzabschnitt (23) die zur Erfassungsposition (27) gerichtete Rückstellkraft auf den Temperatursensor (14) ausübt.

12. Statorvorrichtung nach einem der Ansprüche 1 bis 8, wobei die Erfassungsposition (27) auf einem der Anschlussabschnitte (8) liegt.

13. Statorvorrichtung nach Anspruch 12, wenn abhängig von Anspruch 5, wobei
der Temperatursensor (14) zwischen dem einen der Anschlussabschnitte (8) und dem zweiten Schenkel (19) angeordnet ist.

14. Statorvorrichtung nach Anspruch 12 oder 13, wenn abhängig von Anspruch 3, wobei
der Halterabschnitt (15) einen konvexen Vorsprung (39) aufweist, welcher die zur Erfassungsposition (27) gerichtete Rückstellkraft auf den Temperatursensor (14) ausübt.

15. Statorvorrichtung nach einem der vorhergehenden Ansprüche, wobei
- die Statorwicklung (6) und die Anschlussabschnitte (8) durch Formleiter erster (35) und zweiter Art (36) ausgebildet sind, wobei die Formleiter erster Art (35) jeweils zwei Beinabschnitte, die einen sich axial durch den Statorkern (2) erstreckende Innenabschnitte ausbilden, und einen den Wicklungskopf (6) ausbildenden und die Innenabschnitte verbindenden Verbindungsabschnitt (37) aufweisen, wobei die Formleiter zweiter Art (36) jeweils einen den Innenabschnitt ausbildenden Beinabschnitt aufweisen und einen der Anschlussabschnitte (8) ausbilden und/oder
- die Stromschiene (10) eine Sternpunktverbindung für die Statorwicklung (6) ausbildet und/oder
- die Statorvorrichtung (1) eine Sprühkühlung (53) aufweist, welche dazu eingerichtet ist eine Kühlflüssigkeit (54) auf den Außenteil (9) und/oder die Stromschiene (10) zu sprühen.
